# FASCICULE DE BREVET EUROPEEN

(11) **EP 0 443 903 B1**
(45) Date de publication et mention de la délivrance du brevet: **26.04.1995**
(21) Numéro de dépôt: 91400325.6
(22) Date de dépôt: 11.02.1991
(51) Int. Cl.: F16J 15/20

(54) **Procédé de réalisation d'un anneau d'étanchéité et produit obtenu selon le procédé**
Herstellungsverfahren eines Dichtungsringes und nach einem solchen Verfahren gewonnenes Produkt
Method of making a ring-seal and product obtained with such a method

(30) Priorité: 23.02.1990 FR 9002245
(43) Date de publication de la demande: 28.08.1991
(73) Titulaire: SOCIETE INDUSTRIELLE D'EQUIPEMENT MECANIQUE SUPRANITE, F-75854 Paris Cédex 17 (FR)
(72) Inventeur: Dennys, Jean-Pierre, F-92200 Neuilly sur Seine (FR)
(74) Mandataire: Levy, David

(56) Documents cités:
- US-A- 3 002 776
- US-A- 3 084 946
- US-A- 4 116 451
- RESEARCH DISCLOSURE no. 178, février 1979, page 55; 17801 "Gland Packings"

## Description

La présente invention concerne un procédé de réalisation d'un anneau d'étanchéité et un produit obtenu selon le procédé.

Plus particulièrement, l'invention concerne un anneau d'étanchéité utilisable dans des circuits fluidiques, notamment ceux des centrales thermiques.

Les dimensions des divers appareils dans les centrales thermiques, telles que les vannes, et les pressions de vapeur circulant dans ces appareils ont atteint des valeurs telles que les fabricants des appareils ont remplacé, dans le cas des grands diamètres et de hautes pressions, l'assemblage classique des brides extérieures boulonnées, par un système encastré à l'intérieur de l'appareil.

Dans le cas d'une vanne par exemple, équipée d'un tampon à travers lequel passe une tige de commande, il est nécessaire de disposer un système d'étanchéité dans le volume délimité par une partie inclinée d'une face du tampon, la paroi interne du corps de la vanne et un anneau monobloc qui est tenu par un anneau supérieur démontable encastré dans une gorge annulaire du corps de la vanne. En général, la partie inclinée du tampon dont les faces inférieure et supérieure sont soumises à la pression de fluide en circulation et à la pression extérieure, respectivement, fait un angle de 25° sur l'axe vertical du tampon.

Le système d'étanchéité utilisé encore il y a peu de temps consistait en un anneau métallique de forme appropriée, disposé dans ledit volume et dont la partie ou lèvre inférieure était apte à se déformer, lors du déplacement du tampon engendré par la montée en pression dans le corps de l'appareil. La déformation de la lèvre était suffisante pour assurer l'étanchéité. Toutefois, lorsqu'une fuite intervenait avant la déformation de la lèvre, une érosion du corps de vanne et/ou du tampon était susceptible de se produire ce qui entraînait inévitablement un défaut d'étanchéité.

De plus, lors du démontage du tampon, les forces qui ont été générées par la pression hydrostatique s'exerçant sur la surface intérieure du tampon, et qui ont été transmises intégralement à la lèvre de l'anneau, ont déformé ladite lèvre à un point tel que la force qui est exercée sur le tampon vers l'intérieur de l'appareil pendant les opérations de démontage pour libérer les différents anneaux, peut provoquer un désaxement ou tampon et un coincement contre le corps de l'appareil. Cela nécessiterait de chauffer ou scier le corps pour le dilater, c'est-à-dire de détruire en partie un appareil dont les parois devaient résister à de fortes pressions.

Pour pallier à ces inconvénients, on a proposé récemment de remplacer les anneaux métalliques par des anneaux en graphite expansé recompressés.

Toutefois, de tels anneaux d'étanchéité à base de graphite à épaisseur variable n'ont pu être utilisés que dans des petits volumes à remplir d'une part, et dans des appareils où le fluide est sensiblement stable en pression et en température. Cela tient au fait que pour de grands volumes à remplir on ne maîtrise pas totalement la technique de fabrication d'un anneau en graphite expansé à épaisseur variable qui remplisse la double fonction de tenue en pression et d'étanchéité.

En effet, pendant la compression du graphite les dimensions variant très fortement dans la direction de la compression et les trajectoires des particules du graphite demeurant très voisines de droites parallèles aux parois cylindriques, il s'ensuit qu'aux dimensions les plus grandes dans la direction de compression vont correspondre les densifications les plus faibles.

Il est connu par la publication "Research Disclosure" n° 178, février 1979, relative aux "Gland packings", un système d'étanchéité capable d'empêcher une fuite autour d'un arbre. Toutefois, un tel système met en oeuvre ce qu'on appelle usuellement un "effet de coin" au moyen d'organes de serrage tels que des boulons.

La présente invention a pour but de réaliser un anneau d'étanchéité qui soit à base de graphite expansé, et qui présente de bonnes caractéristiques de tenue en pression et d'étanchéité.

La présente invention a pour objet un procédé de réalisation d'un anneau d'étanchéité tel que défini dans la revendication 1, un des éléments de support prenant en charge les variations de hauteur susceptibles d'être engendrées dans la direction de compression et l'autre assurant l'étanchéité proprement dite, en se déformant suffisamment pour constituer un obstacle au passage du fluide.

La partie assurant l'étanchéité est supportée mécaniquement par l'autre partie et présente une paroi interne sensiblement parallèle à la paroi externe mais décalée dans la direction de compression. Cela permet de la réaliser facilement par compression axiale, à partir d'une ébauche dont on réduit la hauteur dans un rapport de 2 à 1, 3 à 1 ou intermédiaire, ce qui permet d'obtenir la compacité nécessaire pour former barrage au fluide dans la zone extérieure qui correspond au passage du fluide, à la périphérie du tampon.

Un autre objet de la présente invention est un anneau d'étanchéité obtenu selon le procédé ci-dessus et tel que défini dans la revendication 8.

D'autres avantages et caractéristiques de la présente invention ressortiront mieux à la lecture d'un mode de réalisation de l'invention, ainsi que des dessins annexés sur lesquels :

la figure 1 est une vue en coupe de la partie d'une vanne équipée d'un anneau d'étanchéité conforme à la présente invention.

La figure 2 est une vue en coupe agrandie de l'anneau d'étanchéité.

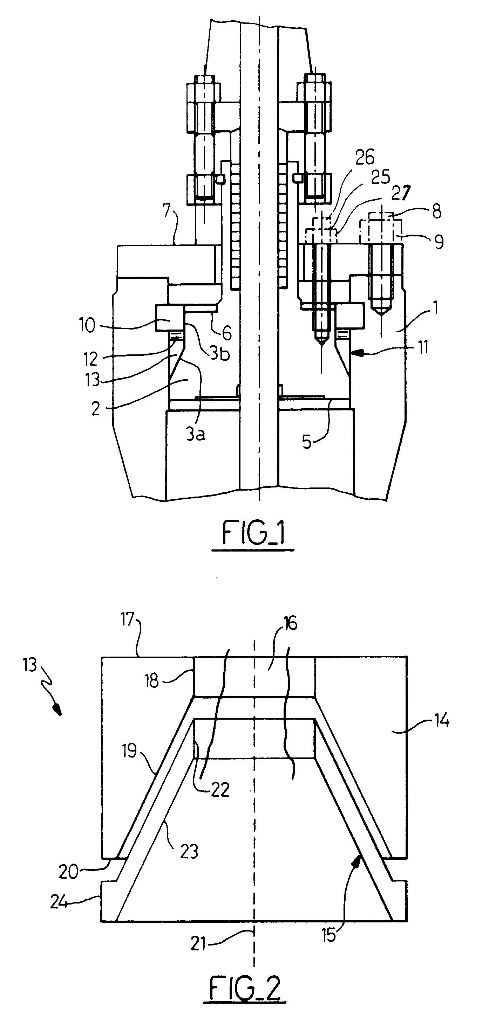

Une vanne du type à opercule telle que représentée en partie sur la figure 1 comprend un corps cylindrique 1 dans lequel est disposé un tampon 2 dont la paroi externe latérale comporte une partie inclinée 3a et des parties verticales 3b de manière à pouvoir se déplacer dans ledit corps de cylindre 1. La face inférieure 5 du tampon 2 est soumise à une pression élevée due au fluide circulant dans ladite vanne, alors que la face supérieure 6 est soumise à la pression externe. La vanne est fermée par une bride supérieure 7 qui est fixée sur le corps cylindrique par des goujons 8 et écrous 9. Une bague à segments 10 est encastrée dans la paroi interne 11 du corps cylindrique et sert d'appui à une bague 12 qui, elle-même, sert d'appui à un anneau d'étanchéité 13. L'anneau d'étanchéité doit, autant que faire se peut, remplir le volume délimité par la paroi interne 11, la bague d'appui 12 et la paroi externe latérale 3 du tampon 2.

Selon la présente invention, l'anneau d'étanchéité est réalisé sous la forme d'au moins deux éléments distincts et emboîtables l'un dans l'autre 14,15 (figure 2).

L'élément 14 est par exemple en graphite expansé qui a été soumis à une force suffisante pour obliger les couches intérieures qui sont les premières compactées à repousser radialement les couches adjacentes situées à l'extérieur, jusqu'à ce qu'on obtienne une zone inférieure sur les couches externes et que la pression interne exercée sur ladite zone inférieure soit environ deux fois supérieure à la pression du fluide en circulation dans la vanne. L'élément 14 est comprimé à taux variables, à une pression comprise entre 200 et 1 500 bars et, de préférence, à 500 bars de manière à utiliser, au maximum, la propriété que présente le graphite, sous de fortes pressions, à se comporter comme un fluide. De ce fait, le graphite expansé comprimé à plus de 500 bars est suffisamment résistant pour constituer un appui stable à l'élément 15, répercuter de façon presque homogène les contraintes internes et les déplacements correspondants, et ce, dans toutes les directions.

L'élément 14 est comprimé de manière à lui conférer une forme d'un anneau cylindro-tronconique. La représentation de la figure 2 n'est pas à l'échelle car l'orifice central 16 peut présenter des dimensions beaucoup plus importantes que la zone d'appui annulaire 17. La partie cylindrique 18 présente une hauteur qui ne peut être inférieure à 0,5 mm. De préférence, la partie cylindrique 18 présente une hauteur comprise entre 6 et 15 mm et dépend essentiellement des dimensions externes qui elles-mêmes, dépendent des pressions mises en jeu dans la vanne. La partie tronconique 19 présente un angle d'inclinaison qui est presque égal à celui de la partie tronconique du tampon qui lui est en regard. Dans l'exemple représenté, l'angle d'inclinaison est d'environ 25° pour permettre au tampon de s'appliquer correctement contre l'anneau d'étanchéité selon l'invention. Un méplat inférieur 20 d'environ 1 mm de large est ménagé sur le bord inférieur de l'élément 14.

L'élément 14 ainsi réalisé occupe la majeure partie du volume à remplir tel que défini précédemment et il est suffisamment rigide pour prendre en charge toutes les variations de hauteur engendrées dans l'axe de révolution 21 de l'anneau. Cela est d'autant plus important que les pressions transmises par le tampon sur l'élément 14, par l'intermédiaire de l'élément 15, sont comprises entre 3 et 6,5 fois la pression du fluide circulant dans la vanne, en raison des sections en présence.

L'élément 15 présente une forme correspondante à celle de l'élément 14 pour pouvoir y être emboîté sans pratiquement de jeu principalement dans la 2ème zone périphérique. L'élément 15 présente une partie cylindrique 22 sensiblement de même hauteur que la partie cylindrique 18, lesdites parties 18 et 22 étant en alignement après emboîtement des éléments 14 et 15. La partie tronconique 23 de l'élément 15 est inclinée de la même manière que la partie 19 de l'élément 14 et elle se termine par un rebord annulaire 24 dont la hauteur est égale à celle de la partie 22 et dont la largeur est égale à la largeur du méplat 20 de l'élément 14.

Lorsque les éléments 14 et 15 sont emboîtés l'un dans l'autre, ils se présentent comme un anneau d'une seule pièce, sans discontinuité géométrique entre eux, autre que leur différence de compacité, l'élément 15 étant destiné à assurer l'arrêt du fluide qui, tendant à monter entre la périphérie du tampon 5 et l'alésage 11, doit être contenu le plus près possible de ce passage.

L'élément 15 est relativement mince et obtenu à partir d'un ruban en graphite expansé enroulé. Il est précomprimé pour sa mise en place à un taux constant, sous un effort de préférence inférieur à celui auquel, une fois en place, il sera soumis par le tampon poussé par la pression ou fluide, afin que les particules de graphite migrent facilement dans les petits espaces disponibles et réalisent l'étanchéité appropriée. L'élément 15 est comprimé à une pression à taux constant comprise entre 100 et 500 bars et en général à une pression voisine de 2 fois la pression du fluide à étancher.

Il va de soi que l'anneau d'étanchéité selon l'invention peut comprendre plus de deux éléments emboîtables. Toutefois, chaque fois que l'anneau d'étanchéité comportera plus de deux éléments, il y aura un élément de base analogue à l'élément 14 , les autres éléments étant analogues à l'élément 15 et présentant des caractéristiques physiques sensiblement égales entre elles. C'est ainsi que chaque élément 15 sera pourvu d'un rebord annulaire dont la hauteur sera égale à la partie cylindrique interne 22 et une largeur égale au méplat 20 de l'élément de base 14.

Lorsque l'anneau d'étanchéité selon l'invention est logé dans son logement dans la vanne (figure 1), et avant que ladite vanne ne soit mise en service, on commence par pré-compresser l'anneau d'étanchéité au moyen d'organes de serrage mécanique 25 constitués par un goujon fileté 26 et un écrou 27, le goujon fileté 26 reliant le tampon 2 à la bride de maintien général 7. L'effort exercé par les organes de serrage est suffisant pour amorcer l'étanchéité en assurant un contact intime entre le tampon 2 et l'anneau d'étanchéité d'une part, et entre l'anneau et la paroi interne du corps 1 d'autre part, appliquer les divers éléments emboîtés 14 et 15 les uns contre les autres et amorcer la déformation de l'anneau d'étanchéité dans toutes les directions pour que le logement de l'anneau d'étanchéité soit presque totalement rempli. Lorsque la vanne est mise en service, le fluide ne peut pénétrer derrière l'anneau ni s'écouler le long de la paroi interne du corps de vanne, les pressions développées dans la vanne augmentant la déformation de l'anneau d'étanchéité. Si besoin était, il est également possible de disposer sur l'élément le plus inférieur de l'anneau d'étanchéité, une tresse de forme appropriée et en amiante par exemple.

Au démontage, il est aisé de constater que l'anneau d'étanchéité selon l'invention peut être récupéré sans grand effort en un ou plusieurs morceaux. Dans tous les cas, la récupération de l'anneau d'étanchéité ne présente aucune difficulté et ne risque pas un endommagement quelconque ni de la paroi interne du corps de vanne ni du tampon lui-même. De même, il n'y a aucun risque de coincement de l'anneau dans son logement puisqu'il sera toujours possible de l'extraire par morceaux.

Bien entendu, l'invention n'est nullement limitée au mode décrit et représenté, elle est susceptible de nombreuses variantes accessibles à l'homme de l'art, suivant les applications envisagées et sans s'écarter pour cela du cadre de l'invention.

## Revendications

1. Procédé de réalisation d'un anneau d'étanchéité à éléments emboîtables, caractérisé en ce qu'il consiste à réaliser un élément de base rigide (14) présentant intérieurement une partie cylindrique (18) et une partie tronconique (19), à réaliser au moins un élément déformable (15) en graphite expansé comprimé à taux constant, l'élément déformable (15) présentant intérieurement une partie cylindrique (22) dont le diamètre est égal au diamètre intérieur de ladite partie cylindrique (18) de l'élément de base (14) et une partie tronconique (23) qui s'ajuste sur ladite partie tronconique (19) de manière à permettre l'emboîtement de l'élément déformable (15) dans l'élément de base (14), le nombre d'éléments (15) emboîtables les uns dans les autres et dans l'élément de base (14) étant choisi de manière à obtenir une hauteur prédéterminée de l'anneau d'étanchéité.

2. Procédé selon la revendication 1, caractérisé en ce que l'élément emboîtable est obtenu à partir d'un ruban en graphite enroulé de largeur constante.

3. Procédé selon la revendication 2, caractérisé en ce que le ruban est comprimé à taux constant suivant un mouvement de translation parallèle à la direction de son axe.

4. Procédé selon la revendication 3, caractérisé en ce que l'élément emboîtable (15) est comprimé à taux constant à une pression comprise entre 100 et 500 bars.

5. Procédé selon la revendication 1, caractérisé en ce que la partie cylindrique (18) de l'élément de base (14) présente une hauteur très inférieure à celle de la partie tronconique (23).

6. Procédé selon les revendications 1 ou 2, caractérisé en ce que l'élément de base (14) est en graphite expansé.

7. Procédé selon la revendication 6, caractérisé en ce que l'élément de base (14) est comprimé avec une pression variable comprise entre 200 et 1500 bars.

8. Anneau d'étanchéité obtenu selon l'une des revendications 1 à 7, caractérisé en ce qu'il comprend un élément de base présentant une partie cylindrique (18) et une partie tronconique (19), ledit élément de base (14) étant suffisamment rigide pour supporter les variations de hauteur susceptibles d'être engendrées par un effort exercé dans l'axe de révolution (21) dudit anneau d'étanchéité, et au moins un élément en graphite expansé qui est comprimé à taux constant, l'élément déformable (15) présentant intérieurement une partie cylindrique (22) dont le diamètre est égal au diamètre intérieur de ladite partie cylindrique (18) de l'élément de base (14) et une partie tronconique (23) qui s'ajuste sur ladite partie tronconique (19) de manière à permettre l'emboîtement de l'élément déformable (15) dans l'élément de base (14).

9. Anneau d'étanchéité selon la revendication 8, caractérisé en ce que l'élément de base (14) est en graphite expansé et fortement comprimé à taux variable.

10. Anneau d'étanchéité selon la revendication 8, caractérisé en ce que la hauteur de la partie cylindrique (18) de l'élément de base est supérieure à 0,5 mm et de préférence à 3 mm.

11. Anneau d'étanchéité selon l'une des revendications 8 à 10, caractérisé en ce qu'il présente un méplat inférieur (20) d'appui pour les autres éléments emboîtables (15).

12. Anneau d'étanchéité selon l'une des revendications 8 ou 11, caractérisé en ce que les éléments emboîtables présentent un rebord annulaire (24) de hauteur égale à la hauteur de leur partie cylindrique (18).

13. Anneau d'étanchéité selon la revendication 9, caractérisé en ce que l'élément de base (14) est comprimé à une pression supérieure à 500 bars.

14. Anneau d'étanchéité selon les revendications 8 et 11 caractérisé en ce que l'élément emboîtable est cylindro-conique et présente un rebord annulaire pour un appui stable sur le méplat (20) et en ce qu'il est comprimé à une pression comprise entre 100 et 500 bars.

## Claims

1. A method of construction of a sealing ring made up of nestable elements, characterized in that said method consists in forming a rigid basic element (14) having a cylindrical part (18) and a frustoconical part (19), in forming at least a deformable element (15) of expanded graphite compressed with a constant ratio, said deformable element (15) having internally a cylindrical part (22) of which the diameter is equal to the internal diameter of said cylindrical part (18) of the basic element (14), and a frustoconical part (23) fitting said frustoconical part (19) of said element (14) in order to enable the deformable element (15) to be nested into the basic element (14), the number of nestable elements (15) within each other and into the basic element (14) being choosen until a sealing ring of predetermined height is obtained.

2. A method according to claim 1, wherein the nestable element is obtained from a coiled strip of graphite of constant width.

3. A method according to claim 2, wherein the strip is compressed with a constant ratio in a movement of translation parallel to the direction of its axis.

4. A method according to claim 3, wherein the nestable element (15) is compressed with a constant ratio under a pressure within the range of 100 to 500 bar.

5. A method according to claim 1, wherein the cylindrical portion (18) of the basic element ( 14) has a height which is considerably smaller than that of the frustoconical part (23).

6. A method according to claim 1 or 2, wherein the basic element (14) is of expanded graphite.

7. A method according to claim 6, wherein the basic element (14) is compressed with a variable ratio under a variable pressure within the range of 200 to 1500 bar.

8. A sealing ring obtained in accordance with one of the claims 1 to 7, wherein said ring comprises a basic element (14) having a cylindrical part (18) and a frustoconical part (19) said basic element (14) being enough rigid for withstanding the height variations which may be produced by a force exerted in the axis of revolution (21) of said sealing ring, and at least one element of expanded graphite which is compressed with a constant ratio said deformable element (15) having internally a cylindrical part (22) of which the diameter is equal to the internal diameter of said cylindrical part (18) of the basic element (14), and a frustoconical part (23) fitting said frustoconical part (19) of said element (14) in order to enable the deformable element (15) to be nested into the basic element (14), the number of nestable elements (15) within each other and into the basic element (14) being choosen until a sealing ring of predetermined height is obtained.

9. A sealing ring according to claim 8, wherein the basic element (14) is of expanded graphite and compressed under high pressure with a variable ratio.

10. A sealing ring according to claim 8, wherein the height of the cylindrical part of the basic element is greater than 0.5 mm and preferably 3 mm.

11. A sealing ring according to one of the claims 8-10, wherein said ring has a flat bearing underface (20) for the other nestable elements (15).

12. A sealing ring according to claim 8 or 11, wherein the nestable elements each have an annular rim (24), the height of which is equal to the height of the cylindrical part (18) of said elements.

13. A sealing ring according to claim 9, wherein the basic element (14) is compressed under a pressure higher than 500 bar.

14. A sealing ring according to claims 8 and 11, wherein the nestable element is of cylindrical-conical shape and has an annular rim which is intended to be applied against the flat underface (20) in a stable manner and wherein said element is compressed under a pressure within the range of 100 to 500 bar.

## Patentansprüche

1. Verfahren zur Herstellung eines Dichtungsringes mit ineinanderschiebbaren Elementen, gekennzeichnet durch Herstellen eines starren Basiselements (14), das innen einen zylinderförmigen Teil (18) und einen kegelstumpfförmigen Teil (19) aufweist, Herstellen mindestens eines verformierbaren Elements (15) aus expandiertem Graphit, der mit konstantem Verhältnis komprimiert wird, wobei das verformbare Element (15) innen einen zylinderförmigen Teil (22), dessen Durchmesser gleich dem inneren Durchmesser des zylinderförmigen Teils (18) des Basiselements (14) ist, und einen kegelstumpfförmigen Teil (23), der auf den kegelstumpfförmigen Teil (19) paßt, aufweist, so daß das Einschieben des verformbaren Elements (15) in das Basiselement (14) möglich ist, wobei die Anzahl der ineinander und in das Basiselement (14) einschiebbaren Elemente so gewählt wird, daß eine vorbestimmte Höhe des Dichtungsrings erreicht wird.

2. Verfahren nach Anspruch 1, dadurch gekennzeichnet, daß man das einschiebbare Element aus einem aufgewickelten Graphitband konstanter Breite erhält.

3. Verfahren nach Anspruch 2, dadurch gekennzeichnet, daß das Band mit einem konstanten Verhältnis in Folge einer parallel zu der Richtung seiner Achse verlaufenden Translationsbewegung komprimiert wird.

4. Verfahren nach Anspruch 3, dadurch gekennzeichnet, daß das einschiebbare Element (15) bei einem Druck zwischen 100 und 500 bar mit einem konstanten Verhältnis komprimiert wird.

5. Verfahren nach Anspruch 1, dadurch gekennzeichnet, daß der zylinderförmige Teil (18) des Basiselements (14) eine Höhe weit unterhalb derjenigen des kegelstumpfförmigen Teils (23) aufweist.

6. Verfahren nach Anspruch 1 oder 2, dadurch gekennzeichnet, daß das Basiselement (14) aus expandiertem Graphit besteht.

7. Verfahren nach Anspruch 6, dadurch gekennzeichnet, daß das Basiselement (14) mit einem veränderlichen Druck zwischen 200 und 1500 bar komprimiert wird.

8. Dichtungsring, der nach einem der Ansprüche 1 bis 7 erhalten wurde, dadurch gekennzeichnet, daß er ein Basiselement (14), das einen zylinderförmigen Teil (18) und einen kegelstumpfförmigen Teil (19) aufweist, wobei das Basiselement (14) ausreichend starr ist, um die Höhenveränderungen auszuhalten, die durch eine entlang der Drehachse (21) des Dichtungsrings ausgeübte Kraft hervorgerufen werden können, und mindestens ein Element aus expandiertem Graphit, der mit einem konstanten Verhältnis komprimiert ist, umfaßt, wobei das verformbare Element (15) innen einen zylinderförmigen Teil (22), dessen Durchmesser gleich dem inneren Durchmesser des zylindrischen Teils (18) des Basiselements (14) ist, und einen kegelstumpfförmigen Teil (23), der auf den kegelstumpfförmigen Teil (19) paßt, aufweist, so daß das Einschieben des verformbaren Elements (15) in das Basiselement (14) möglich ist.

9. Dichtungsring nach Anspruch 8, dadurch gekennzeichnet, daß das Basiselement (14) aus expandiertem Graphit besteht und mit veränderlichem Verhältnis stark komprimiert ist.

10. Dichtungsring nach Anspruch 8, dadurch gekennzeichnet, daß die Höhe des zylinderförmigen Teils (18) des Basiselements größer als 0,5 mm und vorzugsweise größer als 3 mm ist.

11. Dichtungsring nach einem der Ansprüche 8 bis 10, dadurch gekennzeichnet, daß er eine untere Stützabflachung (20) für die anderen einschiebbaren Elemente (15) aufweist.

12. Dichtungsring nach einem der Ansprüche 8 oder 11, dadurch gekennzeichnet, daß die einschiebbaren Elemente einen kreisringförmigen Rand (24) mit gleicher Höhe wie ihr zylinderförmiger Teil (18) aufweisen.

13. Dichtungsring nach Anspruch 9, dadurch gekennzeichnet, daß das Basiselement (14) mit einem Druck größer als 500 bar komprimiert ist.

14. Dichtungsring nach Anspruch 8 und 11, dadurch gekennzeichnet, daß das einschiebbare Element zylindrisch-konisch ist und einen kreisringförmigen Rand für eine stabile Abstützung auf der Stützabflachung (20) aufweist und daß es mit einem Druck zwischen 100 und 500 bar komprimiert ist.
